# EUROPEAN PATENT APPLICATION

(11) **EP 4 517 925 A1**
(43) Date of publication of application: **05.03.2025**
(21) Application number: 24153401.5
(22) Date of filing: 23.01.2024
(51) Int. Cl.: H01M 10/48, H01M 50/24, H01M 50/247, H01M 50/284

(54) **BATTERY PACK WATERPROOF STRUCTURE AND BATTERY PACK**

(30) Priority: 30.08.2023 CN 202311114871
(71) Applicant: Shanghai Baicheng Electric Equipment Manufacture Co. Ltd., Shanghai 201806 (CN)
(72) Inventor: ZHAO, Xianguo, Waigang Town, Jiading District, Shanghai, 201806 (CN); ZHOU, Liangliang, Waigang Town, Jiading District, Shanghai, 201806 (CN); XIN, Chao, Waigang Town, Jiading District, Shanghai, 201806 (CN)
(74) Representative: Ricker, Mathias

(57) **Abstract**

Provided are a battery pack waterproof structure and a battery pack. In the battery pack waterproof structure, the housing includes a first housing (11) and a second housing (12). The first housing (11) and the second housing (12) cooperate to form an accommodation space. The engagement member (20) is slidably connected to the first housing (11). The circuit board (30) is provided with a display unit. The sealing assembly (40) includes a sealing plate (41), a sealing ring (42), and a light guide column (43). The sealing plate (41) is disposed between the engagement member (20) and the circuit board (30) and is secured to the first housing (11) in a circumferential direction. The sealing ring (42) is clamped between the sealing plate (41) and the first housing (11). The first housing (11) is provided with a first avoidance hole.

## Description

### TECHNICAL FIELD

The present invention relates to the field of battery pack technology and, in particular, to a battery pack waterproof structure and a battery pack.

### BACKGROUND

At present, most lithium battery packs used in direct current power tools do not have a waterproof function. When such a product is used indoors, due to the relatively dry environment, a battery pack can be used normally. However, when the product is used outdoors, especially on a rainy day, rainwater may enter the interior of the battery pack, causing an internal electronic component or a battery cell to be short-circuited and fail and thereby making the product lose its function. Additionally, in some special environments, for example, in an environment with high air moisture or in a place near the sea, the product is used on a machine such as a pump/a cleaning machine. Water vapor and water drops may enter the interior of the battery pack, thereby causing an internal electronic component or a battery cell to be short-circuited and fail.

Therefore, a battery pack waterproof structure and a battery pack are urgently needed to solve the preceding technical problem.

### SUMMARY

An object of the present invention is to provide a battery pack waterproof structure and a battery pack so as to provide a waterproof protection for an electronic element in the battery pack.

To achieve this object, the present invention adopts the technical solutions below.

A battery pack waterproof structure is provided. The battery pack waterproof structure includes a housing, an engagement member, a circuit board, and a sealing assembly.

The housing includes a first housing and a second housing. The first housing and the second housing cooperate to form an accommodation space.

The engagement member is slidably connected to the first housing and is able to be partially exposed outside the first housing.

The circuit board is provided with a display unit.

The sealing assembly includes a sealing plate, a sealing ring, and a light guide column. The sealing plate is disposed between the engagement member and the circuit board and is secured to the first housing in a circumferential direction. The sealing ring is clamped between the sealing plate and the first housing. The first housing is provided with a first avoidance hole. The display unit corresponds to the first avoidance hole. The light guide column penetrates the sealing plate. The light guide column is sealed to the sealing plate in the circumferential direction. The light guide column is located between the display unit and the first avoidance hole.

As a preferable technical solution of the preceding battery pack waterproof structure, the light guide column is sealed to the sealing plate at a connection position between the light guide column and the sealing plate by bonding in the circumferential direction.

As a preferable technical solution of the preceding battery pack waterproof structure, a first mounting recess is disposed on the sealing plate in the circumferential direction. The sealing ring is disposed in the first mounting recess. Part of the sealing ring is exposed on one side of the first mounting recess.

As a preferable technical solution of the preceding battery pack waterproof structure, the sealing assembly includes a support frame. The support frame includes a connection portion and a support portion. The support portion is secured to an inner circumferential side of the sealing ring through the connection portion. The support portion is secured to the light guide column. The sealing plate is provided with a second mounting recess. The support portion is inserted into the second mounting recess. The support portion is sealed to the second mounting recess in the circumferential direction.

As a preferable technical solution of the battery pack waterproof structure, the support portion is sealed to the second mounting recess by bonding in the circumferential direction.

As a preferable technical solution of the battery pack waterproof structure, the circuit board is provided with a switch. The first housing is provided with a second avoidance hole. The second avoidance hole corresponds to the switch. The sealing assembly further includes a sealing membrane. The sealing membrane is sealed to the sealing plate in the circumferential direction. The sealing membrane is disposed between the second avoidance hole and the switch.

As a preferable technical solution of the battery pack waterproof structure, the sealing membrane is disposed on the support portion.

A battery pack is further provided. The battery pack includes a battery cell and the preceding battery pack waterproof structure. The battery cell is located on a side of a circuit board facing away from a sealing plate and is secured to a second housing. The circuit board is electrically connected to the battery cell.

As a preferable technical solution of the preceding battery pack, the battery pack further includes a button slidably connected to a second avoidance hole and able to be in contact with a switch through a sealing membrane.

The beneficial effect of the present invention is as below.

The present invention provides a battery pack waterproof structure. The battery pack waterproof structure includes a housing, an engagement member, a circuit board, and a sealing assembly. The housing includes a first housing and a second housing. The first housing and the second housing cooperate to form an accommodation space. The engagement member is slidably connected to the first housing and is able to be partially exposed outside the first housing. The circuit board is provided with a display unit. The sealing assembly includes a sealing plate, a sealing ring, and a light guide column. The sealing plate is disposed between the engagement member and the circuit board and is secured to the first housing in a circumferential direction. The sealing ring is clamped between the sealing plate and the first housing. The first housing is provided with a first avoidance hole. The display unit corresponds to the first avoidance hole. The light guide column penetrates the sealing plate. The light guide column is sealed to the sealing plate in the circumferential direction. The light guide column is located between the display unit and the first avoidance hole.

With this arrangement, the sealing plate is arranged to divide the accommodation space into two subspaces. The sealing ring is disposed between the sealing plate and the first housing so that the sealing plate is sealed to the first housing in the circumferential direction, thereby guaranteeing that the first accommodation space and the second accommodation space are independent of each other. The first accommodation space communicates with the environment outside the housing through the first housing and is configured to arrange the engagement member which is movable relative to the housing. The circuit board is disposed in the relatively closed second accommodation space. When the battery pack is in a wet environment and when formed liquid or water vapor enters the accommodation space from a gap between the engagement member and the first housing, the liquid or water vapor is isolated in the first accommodation space by the sealing assembly and cannot further penetrate into the second accommodation space to get in contact the circuit board and cause a short circuit.

### BRIEF DESCRIPTION OF DRAWINGS

To illustrate the technical solutions in embodiments of the present invention more clearly, the drawings used in the description of the embodiments of the present invention are briefly described below. Apparently, the drawings described below illustrate only part of the embodiments of the present invention, and those of ordinary skill in the art may obtain other drawings based on the embodiments of the present invention and the drawings on the premise that no creative work is done.
FIG. 1 is a structure view of a sealing assembly according to an embodiment of the present invention.
FIG. 2 is a structure view of the sealing assembly (excluding a sealing plate) according to an embodiment of the present invention.
FIG. 3 is a structure view of a battery pack (excluding a first housing) according to an embodiment of the present invention.
FIG. 4 is a top view of the battery pack according to an embodiment of the present invention.
FIG. 5 is a sectional view of FIG. 4.

### Reference list

- 10: housing
- 11: first housing
- 12: second housing
- 13: first accommodation space
- 14: second accommodation space
- 20: engagement member
- 30: circuit board
- 40: sealing assembly
- 41: sealing plate
- 42: sealing ring
- 43: light guide column
- 44: support frame
- 441: connection portion
- 442: support portion
- 45: sealing membrane
- 50: battery cell
- 60: button

### DETAILED DESCRIPTION

The present invention is further described hereinafter in detail in conjunction with drawings and embodiments. It is to be understood that the specific embodiments set forth below are intended to illustrate and not to limit the present invention. In addition, it is to be noted that for ease of description, only part, not all, of the structures related to the present invention are illustrated in the drawings.

In the description of the present invention, unless otherwise expressly specified and limited, the term "connected to each other", "connected" or "secured" is to be construed in a broad sense, for example, as securely connected, detachably connected or integrated; mechanically connected or electrically connected; directly connected to each other or indirectly connected to each other via an intermediary; or internal connection between two components or interaction relations between two components. For those of ordinary skill in the art, specific meanings of the preceding terms in the present invention may be construed based on specific situations.

In the present invention, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, the orientation or position relationships indicated by terms "above", "below", "right" and the like are based on the orientation or position relationships shown in the drawings. These orientations or position relationships are merely for ease of description and simplifying an operation and do not indicate or imply that the referred device or element has a specific orientation and is constructed and operated in a specific orientation. Thus, these orientations or position relationships are not to be construed as limiting the present invention. In addition, the terms "first" and "second" are used only for distinguishing between descriptions and have no special meaning.

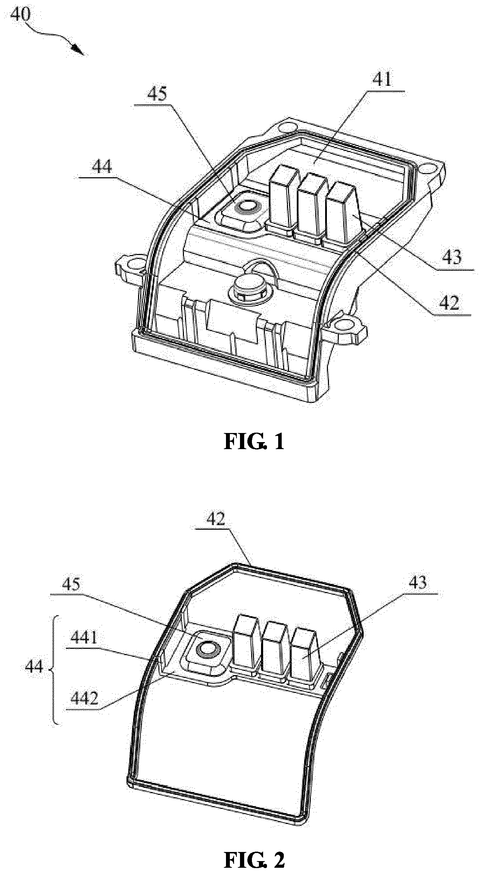

As shown in FIGS. 1 and 2, the present application provides a battery pack waterproof structure. The battery pack waterproof structure includes a housing 10, an engagement member 20, a circuit board 30, and a sealing assembly 40. The housing 10 includes a first housing 11 and a second housing 12. The first housing 11 and the second housing 12 cooperate to form an accommodation space. The engagement member 20 is slidably connected to the first housing 11 and is able to be partially exposed outside the first housing 11. The circuit board 30 is provided with a display unit. The sealing assembly 40 includes a sealing plate 41, a sealing ring 42, and a light guide column 43. The sealing plate 41 is disposed between the engagement member 20 and the circuit board 30 and is secured to the first housing 11 in a circumferential direction. The sealing ring 42 is clamped between the sealing plate 41 and the first housing 11. The first housing 11 is provided with a first avoidance hole. The display unit corresponds to the first avoidance hole. The light guide column 43 penetrates the sealing plate 41. The light guide column 43 is sealed to the sealing plate 41 in the circumferential direction. The light guide column 43 are located between the display unit and the first avoidance hole.

Specifically, the sealing plate 41 and the first housing 11 are secured in the circumferential direction to divide the accommodation space into a first accommodation space 13 and a second accommodation space 14. The first accommodation space 13 is enclosed by the sealing plate 41 and part of the first housing 11. The second accommodation space 14 is enclosed by another part of the first housing 11, the sealing plate 41, and the second housing 12. The first accommodation space 13 and the second accommodation space 14 are independent of each other. The engagement member 20 is disposed in the first accommodation space 13. The engagement member 20 is slidably connected to the first housing 11 and is configured to connect a battery pack to a power tool or separate the battery pack from the power tool. The circuit board 30 is disposed in the second accommodation space 14 and is provided with the display unit. The display unit is configured to display the remaining electric quantity of the battery pack or other states, for example, the temperature and humidity inside the battery pack. The display unit exposes the displayed information outside the first housing 11 through the light guide column 43. The light guide column 43 is sealed to the sealing plate 41 in the circumferential direction.

With this arrangement, the sealing plate 41 is arranged to divide the accommodation space into two subspaces. The sealing ring 42 is disposed between the sealing plate 41 and the first housing 11 so that the sealing plate 41 is sealed to the first housing 11 in the circumferential direction, thereby guaranteeing that the first accommodation space 13 and the second accommodation space 14 are independent of each other. The first accommodation space 13 communicates with the environment outside the housing 10 through the first housing 11 and is configured to arrange the engagement member 20 which is movable relative to the housing 10. The circuit board 30 is disposed in the relatively closed second accommodation space 14. When the battery pack is in a wet environment and when formed liquid or water vapor enters the accommodation space from a gap between the engagement member 20 and the first housing 11, the liquid or water vapor is isolated in the first accommodation space 13 by the sealing assembly 40 and cannot further penetrate into the second accommodation space 14 to get in contact the circuit board 30 and cause a short circuit.

Optionally, the sealing plate 41 is connected to the first housing 11 through a bolt fastener.

Preferably, the light guide column 43 is sealed to the sealing plate 41 at a connection position between the light guide column 43 and the sealing plate 41 by bonding in the circumferential direction. For example, glue or casting seal is selected. The glue can easily fill a circumferential gap between the light guide column 43 and the sealing plate 41 due to the fluidity of the glue. Moreover, with the effect of adhesion and securing, the glue can secure the light guide column 43 and the sealing plate 41.

Optionally, a first mounting recess is disposed on the sealing plate 41 in the circumferential direction. The sealing ring 42 is disposed in the first mounting recess. Part of the sealing ring 42 is exposed on one side of the first mounting recess. The first mounting recess is configured to limit the sealing ring 42 and secure the sealing ring 42 at a connection position between the sealing plate 41 and the first housing 11, thereby maintaining the sealing effect.

Optionally, the sealing assembly 40 includes a support frame 44. The support frame 44 includes a connection portion 441 and a support portion 442. The support portion 442 is secured to an inner circumferential side of the sealing ring 42 through the connection portion 441. The support portion 442 is secured to the light guide column 43. The sealing plate 41 is provided with a second mounting recess. The support portion 442 is configured to be inserted into the second mounting recess. The support portion 442 is sealed to the second mounting recess in the circumferential direction.

Specifically, an avoidance recess is disposed on a sidewall of the first mounting recess. The connection portion 441 of the support frame 44 and the support portion 442 of the support frame 44 are embedded in the second mounting recess of the sealing plate 41 and the avoidance recess respectively. The support frame 44 is sealed to the sealing plate 41 in the circumferential direction. In this case, the support frame 44 enables parts of the sealing assembly 40 to be connected to each other, allowing the connection relationship to be tighter. The light guide columns 43 are mounted intensively through the support portion 442, preventing multiple openings for getting the light guide columns 43 to penetrate through from being disposed on the sealing plate 41, reducing a sealing region, and making the sealing effect of the sealing assemblies 40 more reliable.

Optionally, the support frame 44, the sealing ring 42, and the light guide columns 43 are formed integrally.

Preferably, the support portion 442 is sealed to the second mounting recess by bonding in the circumferential direction.

Optionally, the circuit board 30 is provided with a switch. The first housing 11 is provided with a second avoidance hole. The second avoidance hole corresponds to the switch. The sealing assembly 40 further includes a sealing membrane 45. The sealing membrane 45 is sealed to the sealing plate 41 in the circumferential direction, and is disposed between the second avoidance hole and the switch.

Specifically, in normal use, the display unit only plays a prompt role and does not need to stay in the lighting state for a long time. Therefore, the switch is disposed on the circuit board 30 for the display unit and is configured to trigger the lighting state or extinguishing state of the display unit. The switch is enclosed in in the second accommodation space 14 through the sealing membrane 45. The sealing membrane 45 can be deformed. When an operator needs to know the relevant information of the battery pack by means of the display unit, the operator extends into the first accommodation space 13 from the second avoidance hole and presses the switch through the sealing membrane 45 to trigger the lighting state of the display unit and read information.

Optionally, the sealing membrane 45 is disposed on the support portion 442. With this arrangement, the sealing membrane 45 is disposed on the support portion 442, thereby reducing the number of avoidance holes disposed on the sealing plate 41.

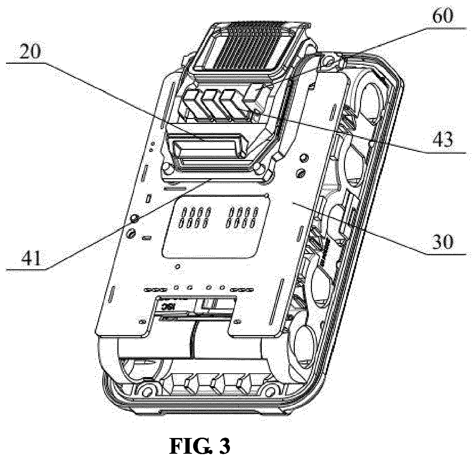

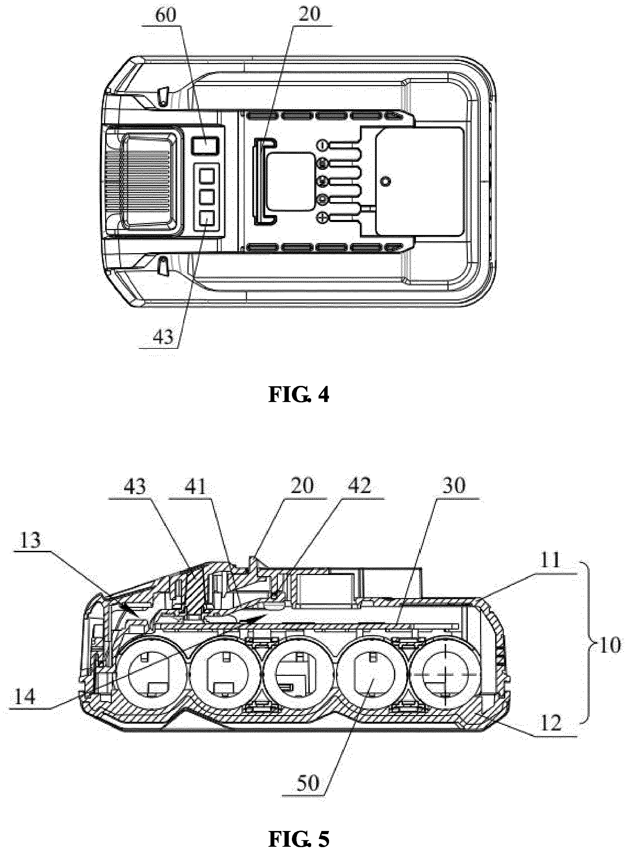

As shown in FIGS. 3 to 5, a battery pack is further provided. The battery pack includes a battery cell 50 and the preceding battery pack waterproof structure. The battery cell 50 is located on a side of the circuit board 30 facing away from the sealing plate 41 and is secured to the second housing 12. The circuit board 30 is electrically connected to the battery cell 50.

The battery pack in this embodiment may be a lithium battery pack or a battery pack in another type.

Optionally, the battery pack further includes a button 60 slidably connected to the second avoidance hole and able to be in contact with the switch through the sealing membrane 45. Such an arrangement is convenient for operation of the operator. Moreover, a position of the button 60 relative to the switch is fixed so that the switch can be triggered accurately.

Optionally, the sealing assembly 40 further includes a support plate or a support column. A support plate is taken as example. The support plate is disposed between the button 60 and the sealing membrane 45 and is secured to the sealing membrane 45. In order to avoid the breakage of the sealing membrane 45 due to the frequent contact between the button 60 and the sealing membrane 45 and a relatively fixed contact point, which then causes the communication between the first accommodation space 13 and the second accommodation space 14, the support plate is added between the button 60 and the sealing membrane 45. The button 60 acts on the sealing membrane 45 through the support plate to reduce the friction with the sealing membrane 45.

## Claims

1. A battery pack waterproof structure, comprising:
a housing (10) comprising a first housing (11) and a second housing (12), wherein the first housing (11) and the second housing (12) cooperate to form an accommodation space;
an engagement member (20) slidably connected to the first housing (11) and able to be partially exposed outside the first housing (11);
a circuit board (30) provided with a display unit; and
a sealing assembly (40) comprising a sealing plate (41), a sealing ring (42), and a light guide column (43), wherein the sealing plate (41) is disposed between the engagement member (20) and the circuit board (30) and is sealedly secured to the first housing (11) in a circumferential direction, the sealing ring (42) is configured to be clamped between the sealing plate (41) and the first housing (11), the first housing (11) is provided with a first avoidance hole, the display unit corresponds to the first avoidance hole, the light guide column (43) penetrates the sealing plate (41), the light guide column (43) is sealed to the sealing plate (41) in the circumferential direction, and the light guide column (43) is located between the display unit and the first avoidance hole.

2. The battery pack waterproof structure according to claim 1, wherein the light guide column (43) is sealed to the sealing plate (41) at a connection position between the light guide column (43) and the sealing plate (41) by bonding in the circumferential direction.

3. The battery pack waterproof structure according to claim 1 or 2, wherein a first mounting recess is disposed on the sealing plate (41) in the circumferential direction, the sealing ring (42) is disposed in the first mounting recess, and part of the sealing ring (42) is exposed on one side of the first mounting recess.

4. The battery pack waterproof structure according to anyone of the claims 1 to 3, wherein the circuit board (30) is provided with a switch, the first housing (11) is provided with a second avoidance hole, the second avoidance hole corresponds to the switch, the sealing assembly (40) further comprises a sealing membrane (45), the sealing membrane (45) is sealed to the sealing plate (41) in the circumferential direction, and the sealing membrane (45) is disposed between the second avoidance hole and the switch.

5. The battery pack waterproof structure according to anyone of the claims 1 to 4, wherein the sealing assembly (40) comprises a support frame (44), the support frame (44) comprises a connection portion (441) and a support portion (442), the support portion (442) is secured to an inner circumferential side of the sealing ring (42) through the connection portion (441), the support portion (442) is secured to the light guide column (43), the sealing plate (41) is provided with a second mounting recess, the support portion (442) is configured to be inserted into the second mounting recess, and the support portion (442) is sealed to the second mounting recess in the circumferential direction.

6. The battery pack waterproof structure according to claim 5, wherein the support portion (442) is sealed to the second mounting recess by bonding in the circumferential direction.

7. The battery pack waterproof structure according to claim 5, wherein the sealing membrane (45) is configured to be fixed on the support portion (442).

8. A battery pack, comprising a battery cell (50) and the battery pack waterproof structure according to any one of claims 1 to 7, wherein the battery cell (50) is located on a side of the circuit board (30) facing away from the sealing plate (41) and is secured to the second housing (12), and the circuit board (30) is electrically connected to the battery cell (50).

9. The battery pack according to claim 8, further comprising a button (60) slidably connected to a second avoidance hole and able to be in contact with a switch through a sealing membrane (45).

## Amended claims

### Amended claims in accordance with Rule 137(2) EPC.

1. A battery pack waterproof structure, comprising:
a housing (10) comprising a first housing (11) and a second housing (12), wherein the first housing (11) and the second housing (12) cooperate to form an accommodation space;
an engagement member (20) slidably connected to the first housing (11) and able to be partially exposed outside the first housing (11);
a circuit board (30) provided with a display unit; and
a sealing assembly (40) comprising a sealing plate (41), a sealing ring (42), and a light guide column (43), wherein the sealing plate (41) is disposed between the engagement member (20) and the circuit board (30) and is sealedly secured to the first housing (11) in a circumferential direction, the sealing ring (42) is configured to be clamped between the sealing plate (41) and the first housing (11), the first housing (11) is provided with a first avoidance hole, the display unit corresponds to the first avoidance hole, the light guide column (43) penetrates the sealing plate (41), the light guide column (43) is sealed to the sealing plate (41) in the circumferential direction, and the light guide column (43) is located between the display unit and the first avoidance hole, **characterized in that**
a first mounting recess is disposed on the sealing plate (41) in the circumferential direction, the sealing ring (42) is disposed in the first mounting recess, and part of the sealing ring (42) is exposed on one side of the first mounting recess;
the circuit board (30) is provided with a switch, the first housing (11) is provided with a second avoidance hole, the second avoidance hole corresponds to the switch, the sealing assembly (40) further comprises a sealing membrane (45), the sealing membrane (45) is sealed to the sealing plate (41) in the circumferential direction, and the sealing membrane (45) is disposed between the second avoidance hole and the switch; and
the sealing assembly (40) comprises a support frame (44), the support frame (44) comprises a connection portion (441) and a support portion (442), the support portion (442) is secured to an inner circumferential side of the sealing ring (42) through the connection portion (441), the support portion (442) is secured to the light guide column (43), the sealing plate (41) is provided with a second mounting recess, the support portion (442) is configured to be inserted into the second mounting recess, and the support portion (442) is sealed to the second mounting recess in the circumferential direction.

2. The battery pack waterproof structure according to claim 1, wherein the light guide column (43) is sealed to the sealing plate (41) at a connection position between the light guide column (43) and the sealing plate (41) by bonding in the circumferential direction.

3. The battery pack waterproof structure according to claim 1, wherein the support portion (442) is sealed to the second mounting recess by bonding in the circumferential direction.

4. The battery pack waterproof structure according to claim 1, wherein the sealing membrane (45) is configured to be fixed on the support portion (442).

5. A battery pack, comprising a battery cell (50) and the battery pack waterproof structure according to any one of claims 1 to 4, wherein the battery cell (50) is located on a side of the circuit board (30) facing away from the sealing plate (41) and is secured to the second housing (12), and the circuit board (30) is electrically connected to the battery cell (50).

6. The battery pack according to claim 5, further comprising a button (60) slidably connected to a second avoidance hole and able to be in contact with a switch through a sealing membrane (45).
